# EUROPEAN PATENT APPLICATION

(11) **EP 4 621 737 A1**
(43) Date of publication of application: **24.09.2025**
(21) Application number: 25165419.0
(22) Date of filing: 21.03.2025
(51) Int. Cl.: G06V 20/52

(54) **METHOD OF VIDEO SURVEILLANCE, COMPUTER PROGRAM, STORAGE MEDIUM AND VIDEO SURVEILLANCE SYSTEM**

(30) Priority: 21.03.2024 GB 202404074
(71) Applicant: Milestone Systems A/S, 2605 Brøndby (DK)
(72) Inventor: NASROLLAHI, Kamal, DK-2605 Brøndby (DK); NORTON, Barry, DK-2605 Brøndby (DK)
(74) Representative: Canon Europe Limited

(57) **Abstract**

The invention provides a method of video surveillance comprising receiving video data from at least one video surveillance camera in video management software - VMS; performing first analysis with a first analytics model, for detecting an event and/or object of interest in the video data as a first analytics result; and performing second analysis with a second analytics model comprising a Large Vision Language Model - LVLM, for confirming and/or refining the first analytics result as a second analytics result; wherein performing the second analysis is more compute-intensive than performing the first analysis, and comprises prompting the LVLM using a prompt based on the first analytic result, and contextual information provided by at least the VMS.

## Description

### Technical field of the Invention

The present invention relates to a computer-implemented method of video surveillance, a computer program and a storage medium comprising such a program, and a video surveillance system. The present invention more particularly relates to video analytics and detection of objects and/or events of interest in video data, using Video Management Software (VMS).

### Background of the Invention

Surveillance systems are typically arranged to monitor surveillance data received from a plurality of data capture devices. A viewer may be overwhelmed by large quantities of video data captured by a plurality of cameras. If the viewer is presented with video data from all of the video cameras, then the viewer will not know which of the video cameras requires the most attention. Conversely, if the viewer is presented with video data from only one of the video cameras, then the viewer may miss an event that is observed by another camera.

An assessment needs to be made of how to allocate resources so that the most important surveillance data is viewed and/or recorded. For video data that is presented live, presenting the most important information assists the viewer in deciding actions that need to be taken, at the most appropriate time. For video data that is recorded, storing and retrieving the most important information assists the viewer in understanding events that have previously occurred. Providing an alert or generating a so-called rules-based 'event' (i.e. an action triggered by an actual event of interest) to identify important information ensures that the viewer is provided with the appropriate context in order to assess whether captured surveillance data requires further attention.

Typically, the viewer is interested to view video data that depicts the motion of objects that are of particular interest, such as people or vehicles. Video Anomaly Detection (VAD), in the field of computer vision (CV), also referred to as abnormal event detection, abnormality detection or outlier detection is the identification of rare events in data. When applied to CV this concerns the detection of abnormal behaviour in amongst other things people, crowds and traffic. With the ability to automatically determine if footage is relevant or irrelevant through anomaly detection, this amount of footage could be greatly reduced and could potentially allow for live investigation of the surveillance. This could result in emergency personal receiving notice of a traffic accident before it is called in by bystanders, care takers to know if an elderly has fallen down or police to be aware of an escalating situation requiring their intercession.

Video surveillance systems typically include a considerable number of cameras, connected to VMS in one or more monitoring rooms (depending on the number of cameras), in which human operators are available 24/7 to verify or reject alarms raised by video analytics integrated in or coupled with the VMS. These can be advanced analytics, such as for performing VAD, or simple analytics, such as for performing line crossing detection, perimeter crossing detection (or perimeter protection), intrusion detection or more basically motion detection.

However, the absolute majority of such alarms corresponds to 'false positives' because analytics systems generally pick up 'false positives' in order not to miss 'true positives'. This in turn increases decision fatigue amongst operators and increases the risk that operators make errors in judgment by ultimately dismissing 'true positives' as 'false positives'.

Several solutions have been proposed to solve these issues, such as deploying better analytics models, fine-tuning existing models and/or using Edge computing. However, these solutions are generally expensive and/or not easily scalable. It is also generally not possible to process all false positives with a single GPU or any other kind of processor.

The present invention aims to address at least some of the above-mentioned problems, and/or to provide alternative video surveillance methods, systems and computer programs for video surveillance. The invention also provides a computer-readable data carrier (e.g. non-transitory storage medium) having stored thereon one or more of the said computer programs for implementing the invention.

### Summary of the Invention

The present invention proposes to use a Large Vision Language Model (LVLM) as a powerful model that can filter out the false positives that are generated by more simple analytics sitting, for example, on Edge or on other less-complex analytical servers. More particularly, the present invention proposes to use contextual information to prompt the LVLM properly. This is because proper prompting of such models is critical for their performance. The LVLM filters out the false positives and allows to reduce the number of alarms passed on to human operators for final verification.

To this end, the invention provides in a first aspect a method of video surveillance comprising:
- receiving video data from at least one video surveillance camera in video management software - VMS;
- performing first analysis with a first analytics model, for detecting an event and/or object of interest in the video data as a first analytics result; and
- performing second analysis with a second analytics model comprising a Large Vision Language Model - LVLM, for confirming and/or refining the first analytics result as a second analytics result;
wherein performing the second analysis is more compute-intensive than performing the first analysis, and comprises prompting the LVLM using a prompt based on the first analytics result, and contextual information provided by at least the VMS.

Optionally, in the method according to the present disclosure, the said at least one video surveillance camera performs the first analysis and the VMS performs the second analysis for the video data from the said at least one video surveillance camera.

Optionally, in the method according to the present disclosure, the VMS performs the first and second analyses for the video data from the said at least one video surveillance camera.

Optionally, in the method according to the present disclosure, the VMS receives video data from a plurality of video surveillance cameras, and the first analysis is performed for each video surveillance camera either in the VMS or in that video surveillance camera, and the VMS respectively performs the second analysis for each video surveillance camera.

Optionally, in the method according to the present disclosure, the prompt is generated by a prompt engine in the VMS, and the prompt engine comprises at least one of a rule-based model or machine learning model.

Optionally, in the method according to the present disclosure, the prompt engine generates the prompt based on at least one ontology-based knowledge graph representing events and/or objects detected in the video data and/or possible events and/or objects in the video data.

Optionally, the method according to the present disclosure further comprises displaying the prompt or a summary thereof to a user.

Optionally, the method according to the present disclosure further comprises receiving a user instruction to prompt the LVLM with the prompt that is displayed.

Optionally, in the method according to the present disclosure, the LVLM is prompted upon obtaining the first analytics result.

Optionally, in the method according to the present disclosure, the first analytics result is obtained when at least one variable for detecting the event and/or object of interest in the video data meets or crosses a predetermined threshold.

Optionally, in the method according to the present disclosure, the prompt is displayed along the second analytics result.

Optionally, in the method according to the present disclosure, the analytics models are classifiers.

Optionally, in the method according to the present disclosure, the classifiers respectively perform video and/or object classification.

Optionally, in the method according to the present disclosure, at least the second analytics result triggers a notification and/or alarm in the VMS.

Optionally, in the method according to the present disclosure, both the first and second analytics results respectively trigger a notification and/or alarm in the VMS, to provide two levels of signalling to a user of the VMS.

Optionally, in the method according to the present disclosure, the contextual information comprises one or more attributes of, and/or values provided by, at least one item chosen in the group comprising: the VMS, the at least one video surveillance camera, physical surveillance and/or security devices, a user of the VMS and/or their behaviour, a scene of the video surveillance, the video surveillance itself and/or one or more environmental conditions thereof.

Optionally, the method according to the present disclosure further comprises using one or more additional analytics models to form a hierarchical chain of analytics models starting with the said first analytics model, wherein each additional analytics model confirms or refines the analytics result of a preceding model in the chain.

Optionally, in the method according to the present disclosure, the analytics models are ordered from the least to the most compute-intensive model.

Optionally, in the method according to the present disclosure, at least one analytics model performs Video Anomaly Detection, VAD.

Preferable features of the first aspect are also preferable features of the other aspects of the present invention.

The invention further provides in a second aspect a computer program comprising instructions which, when executed by a computer, cause the computer to carry out a method according to any one of the above-mentioned embodiments or combinations thereof. The invention also provides a computer-readable data carrier (e.g. non-transitory storage medium) having stored thereon one or more of the said computer programs for implementing the invention.

The invention further provides in a third aspect a video surveillance system comprising one or more processors configured to:
- receive video data from at least one video surveillance camera in video management software - VMS;
- perform first analysis with a first analytics model, for detecting an event and/or object of interest in the video data as a first analytics result; and
- perform second analysis with a second analytics model comprising a Large Vision Language Model - LVLM, for confirming and/or refining the first analytics result as a second analytics result;
wherein performing the second analysis is more compute-intensive than performing the first analysis, and comprises prompting the LVLM using a prompt based on the first analytic result, and contextual information provided by at least the VMS.

Optionally, in the video surveillance system according to the disclosure, the said at least one video surveillance camera is configured to perform the first analysis and the VMS is configured to perform the second analysis for the video data from the said at least one video surveillance camera.

Optionally, in the video surveillance system according to the disclosure, the VMS is configured to perform the first and second analyses for the video data from the said at least one video surveillance camera.

Optionally, in the video surveillance system according to the disclosure, the VMS is configured to receive video data from a plurality of video surveillance cameras, and the first analysis is performed for each video surveillance camera either in the VMS or in that video surveillance camera, and the VMS is configured to respectively perform the second analysis for each video surveillance camera.

Optionally, in the video surveillance system according to the disclosure, the contextual information comprises one or more attributes of, and/or values provided by, at least one item chosen in the group comprising: the VMS, the at least one video surveillance camera, physical surveillance and/or security devices, a user of the VMS and/or their behaviour, a scene of the video surveillance, the video surveillance itself and/or one or more environmental conditions thereof.

Aspects of the present disclosure are set out by the independent claims and preferred features of the disclosure are set out in the dependent claims.

Further features of the present disclosure will become apparent from the following description of embodiments with reference to the attached drawings.

### Brief description of the drawings

Embodiments of the present invention will now be described, by way of example only, with reference to the accompanying drawings in which:
Figure 1 is a diagram illustrating an example of a video surveillance system in which the present invention can be implemented;
Figure 2 is a diagram illustrating an example of a video surveillance system monitoring a plurality of scenes, according to the prior art;
Figure 3 is a diagram illustrating an example of a video surveillance system monitoring a plurality of scenes, according to the invention;
Figure 4 is a diagram and pipeline illustrating a portion of the VMS comprising a prompt engine, first analytics and second analytics models, and respective inputs and outputs thereof;
Figure 5 is a flowchart illustrating a method of video surveillance according a first embodiment of the invention;
Figure 6 is a flowchart illustrating a method of video surveillance according a second embodiment of the invention.

Additional features of the present invention will become apparent from the following description of embodiments with reference to the attached drawings.

### Detailed Description of the Invention

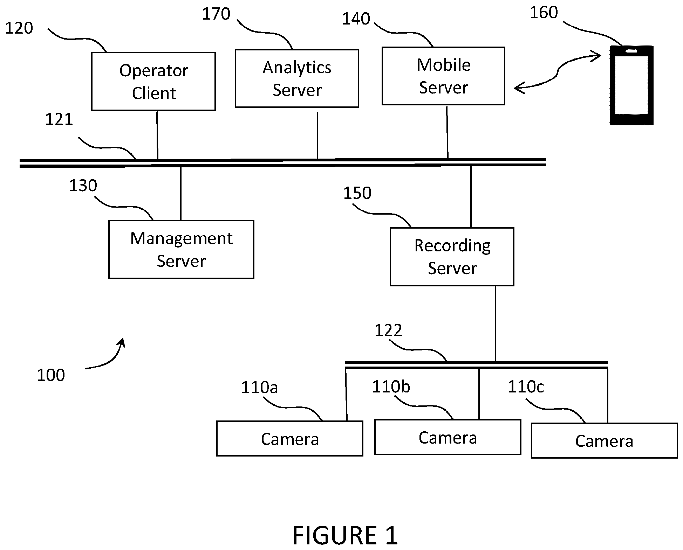

Figure 1 shows an example of a known video surveillance system 100 in which embodiments of the invention can be implemented. The system 100 comprises a management server 130, a recording server 150, an analytics server 170, and a mobile server 140, which collectively may be referred to as a video management system. Further servers may also be included in the video management system, such as further recording servers or archive servers. A plurality of video surveillance cameras 110a, 110b, 110c send video data to the recording server 150. An operator client 120 is a fixed terminal which provides an interface via which an operator can view video data live from the video cameras 110a, 110b, 110c, and/or recorded video data from the recording server 150.

The video cameras 110a, 110b, 110c capture image (video or moving image) data and send this to the recording server 150 as a plurality of video data streams.

The recording server 150 stores the video data streams captured by the video surveillance cameras 110a, 110b, 110c. Video data is streamed from the recording server 150 to the operator client 120 depending on which live streams or recorded streams are selected by an operator to be viewed.

The mobile server 140 communicates with a user device 160 which is a mobile device such as a smartphone or tablet which has a touch screen display. The user device 160 can access the system from a browser using a web client or a mobile client. Via the user device 160 and the mobile server 140, a user can view recorded video data stored on the recording server 150. The user can also view a live feed via the user device 160.

The analytics server 170 may run analytics software for image analysis, for example motion or object detection, facial recognition, and/or event detection. The analytics server 170 may generate metadata which is added to the video data and which describes objects and/or events which are identified in the video data. This may include performing video captioning, and recording any corresponding captioning as metadata.

Other servers may also be present in the system 100. For example, an archiving server (not illustrated) may be provided for archiving older data stored in the recording server 150 which does not need to be immediately accessible from the recording server 150, but which it is not desired to be deleted permanently. A fail-over recording server (not illustrated) may be provided in case a main recording server fails.

The operator client 120, the analytics server 170 and the mobile server 140 are configured to communicate via a first network/bus 121 with the management server 130 and the recording server 150. The recording server 150 communicates with the video cameras 110a, 110b, 110c via a second network/bus 122.

The management server 130 includes Video Management Software (VMS) for managing information regarding the configuration of the surveillance/monitoring system 100 such as conditions for alarms, details of attached peripheral devices (hardware), which data streams are recorded in which recording server, etc. For instance, the VMS may be the XProtect^{®} software program developed by Milestone Systems A/S. The management server 130 also manages user information such as operator permissions, roles and the like. When an operator client 120 is connected to the system, or a user logs in, the management server 130 determines if the user is authorised to view video data. The management server 130 also initiates an initialisation or set-up procedure during which the management server 130 sends configuration data to the operator client 120. The configuration data defines the video cameras in the system, and which recording server (if there are multiple recording servers) each video camera is connected to. The operator client 120 then stores the configuration data in a cache. The configuration data comprises the information necessary for the operator client 120 to identify cameras and obtain data from cameras and/or recording servers.

Object detection/recognition can be applied to the video data by object detection/recognition software running on the analytics server 170. The object detection/recognition software preferably generates metadata which is associated with the video stream and defines where in a frame an object has been detected. The metadata may also define what type of object has been detected e.g. person, car, dog, bicycle, and/or characteristics of the object (e.g. colour, speed of movement etc). Other types of video analytics software can also generate metadata, such as licence plate recognition, or facial recognition.

Object detection/recognition software, may be run on the analytics server 170, but some cameras can also carry out object detection/recognition on Edge and generate metadata, which is included in the stream of video data sent to the recording server 150. Therefore, metadata from video analytics can be generated in a video camera, in the analytics server 170 or both.

It is not essential to the present invention where the metadata is generated. The metadata may be stored in the recording server 150 with the video data, and transferred to the operator client 120 with or without its associated video data.

Moreover, one of more of the above-mentioned servers may be implemented as virtual servers. It is also not essential to the present invention whether the servers are separate physical entities. **In** particular, the VMS may run on a plurality of servers and/or include one or more servers, including the said analytics server (which can also be a virtual server).

The video surveillance system of Figure 1 is an example of a system in which the present invention can be implemented. However, other architectures are possible. For example, the system of Figure 1 is an "on premises" system, but the present invention can also be implemented in a cloud based system. **In** a cloud based system, the video cameras stream data to the cloud, and at least the recording server 150 is in the cloud. Video analytics may be carried out at the video camera, and/or in the cloud. The operator client 120 or mobile client 160 requests the video data to be viewed by the user from the cloud.

A search facility of the operator client 120 may allow a user to look for a specific object or combination of objects by searching metadata. Metadata generated by video analytics such as object detection/recognition discussed above can allow a user to search for specific objects or combinations of objects (e.g. white van or man wearing a red baseball cap, or a red car and a bus in the same frame, or a particular license plate or face). The operator client 120 or the mobile client 160 will receive user input of at least one search criterion, and generate a search query.

A search can then be carried out for metadata matching the search query. The search software then sends a request to extract image data from the recording server 150 corresponding to portions of the video data having metadata matching the search query, based on the timestamp of the video data. This extracted image data is then received by the operator client 120 or mobile client 160 and presented to the user at the operator client 120 or mobile client 160 as search results, typically in the form of a plurality of thumbnail images, wherein the user can click on each thumbnail image to view a video clip that includes the object or activity.

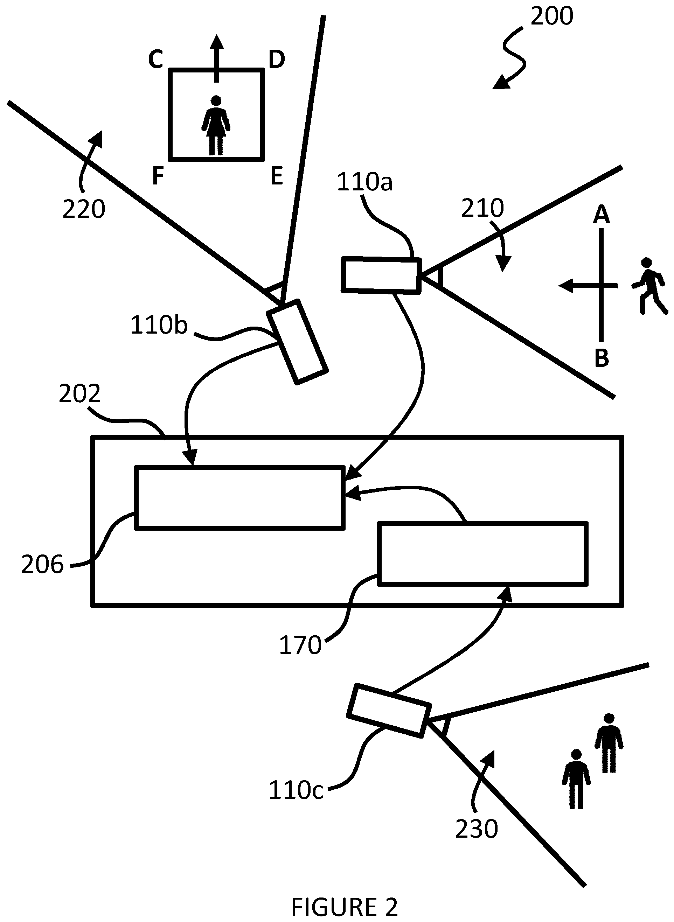

Figure 2 illustrates an example of a video surveillance system 200 monitoring a plurality of scenes 210, 220, 230 according to the prior art. The system 200 comprises a plurality of video cameras 110a, 110b and 110c as described above. However, in the present example, the video cameras 110a and 110b have built-in video analytics capabilities (i.e. include on Edge analytics), whereas the video camera 110c is not capable of performing video analyses. The video camera 110a is capable of performing on Edge line crossing detection to detect object and/or people crossing a line A-B in the scene 210. That is, the video camera 110a includes a line crossing detection model (corresponding to an example of a first analytics model that could be used with the invention). The video camera 110b is capable of performing on Edge perimeter crossing detection to detect object and/or people crossing a perimeter C-D-E-F in the scene 220. That is, the video camera 110b includes a perimeter crossing detection model (also corresponding to an example of a first analytics model that could be used with the invention). The video camera 110c captures video data from a scene 230.

The video cameras 110a, 110b, 110c communicate with a VMS 202, as described above. In the present example, the VMS 202 includes an analytics server 170 as described above. The server 170 is connected to the video camera 110c which does not have analytics capabilities and includes an analytics model for counting people above a predetermined threshold in the scene 230 (corresponding to an example of a first analytics model that could be used with the invention). The first analytics model may be configured to determine a first analytics result when at least one variable for detecting the event and/or object of interest in the video data meets or crosses a predetermined threshold (e.g. a confidence score or confidence threshold), as the first analytics model may issue different results depending on, for example, a brightness and/or focus of the image in the video data, moving objects in the monitored environment such as tree leaves etc.

In the present example, the video cameras 110a, 110b are not connected to the analytics server 170 since they have their own analytics capabilities, whereas the video camera 110c is connected to the said analytics server 170. The analytics server 170 is configured to communicate with an event server 206 that can generate notifications and/or raise alarms upon detection of an object and/or event of interest by the analytics server 170. The event server 206 is configured in any known way, for example via the operator client 120 or mobile client 160. The video cameras 110a and 110b are here directly connected to the event server 206, which is configured to generate such notifications and/or raise such alarms upon detection of an object and/or event of interest by the video cameras 110a and 110b themselves. Other configurations are of course possible. For instance, the video cameras 110a and 110b may communicate with the analytics server 170 such that the server 170 may verify or supplement analytics results originating from these video cameras 110a, 110b, which in turn may trigger the event server 206 to generate a notification and/or raise an alarm.

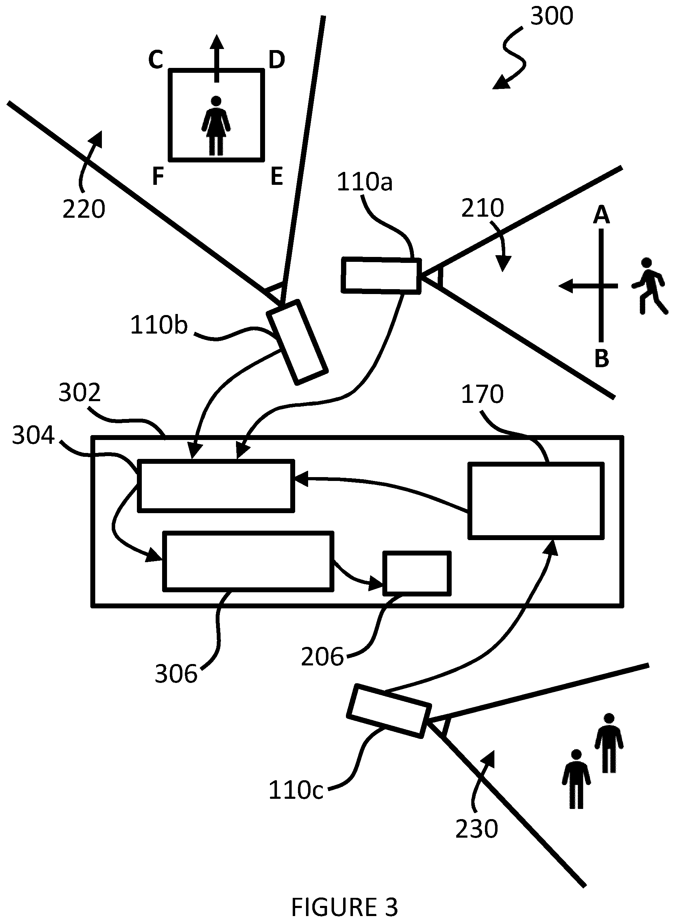

Figure 3 illustrates an example of a video surveillance system 300 monitoring a plurality of scenes 210, 220, 230, according to a first embodiment of the invention. In the first embodiment, only differences and/or improvements from the video surveillance system 200 of Figure 2 will be described.

In the first embodiment, the video cameras 110a and 110b respectively include a first analytics model as described above, whereas the analytics server 170 includes a first analytics model for the video camera 110c.

However, in the first embodiment, the VMS 302 includes at least one second analytics model 306 for confirming and/or refining the first analytics results coming from the video cameras 110a and 110b, and the event server 170, as respective second analytics results.

The second analytics model 306 comprises a LVLM as described above, that is capable of performing more compute-intensive tasks than the video analytics models built in the video cameras 110 and 110b, and the analytics server 170, such as for example confirming that a person has indeed crossed line A-B in scene 210 or perimeter C-D-E-F in scene 220, and whether that person is the same as a person detected some time ago by the same or another video camera. As another example, the second analytics model 306 may be configured to confirm whether some people are having a fight with each other.

The second analytics model 306 is configured to communicate with an event server 206 to generate notifications and/or raise alarms as described above. The first analytics model may also be configured to communicate with the event server 206 to generate notifications and/or raise alarms. In such a case, it becomes possible to provide two levels of signalling to a user of the VMS (e.g. a low volume alert when a first analytics result is determined, followed by a high volume alert upon confirmation and/or refinement of the first analytics result by the second analytics model).

In the first embodiment of the invention, each second analytics model 306 directly or indirectly receives a corresponding first analytics result (e.g. 'a person or an object has crossed line A-B', 'a person or an object has crossed perimeter C-D-E-F', or 'there are 2 people next to each other in scene 230') from a first analytics model (whether from a video camera 110a, 100b or the analytics server 170), which is to be confirmed or refined by using the LVLM of the second analytics model 306.

In the first embodiment of the invention, the second analytics model 306 is preferably prompted or queried by a prompt engine 304 using prompts such as, for example, 'what was the object that crossed line A-B in scene 210 monitored by video camera 110a?', 'was the person or object crossing perimeter C-D-E-F in scene 220 monitored by video camera 110b the same as the person detected 10 minutes ago by video camera 110b?', or 'are the people in scene 230 monitored by video camera 110c having a fight?'.

In the first embodiment of the invention, the prompt engines passes on contextual information to the LVLM, such as contextual information about the video surveillance itself and/or VMS, for example the names or IDs of the cameras in association with the scenes they monitor (e.g. information that 'scene 210 is monitored by video camera 110a', 'scene 220 is monitored by video camera 110b'), information related to their fields of view, locations, built-in analytics models they comprise, relationship and/or distance between the video cameras etc.; metadata recorded in the VMS 302 (e.g. information that 'a person was detected 10 minutes ago by video camera 110b', as recorded previously); contextual information about the user of the VMS and/or their behaviour (e.g. 'the user is not allowed to see footage from or obtain information associated with video surveillance camera 110c' and 'the user has indicated that that they are not interested in the analytics results previously provided to them'); contextual information provided by, for example physical and/or security devices, such as access control devices (e.g. 'access control was requested 1 minute ago to enter the scene 210'); contextual information regarding the video surveillance itself (e.g. 'there is three scenes 210, 220, 230 under surveillance') or one or more environmental or weather conditions thereof (e.g. information that 'it is raining', which may be relevant for determining that a car has gone above a variable speed limit); contextual information regarding the date and time, the image quality and/or resolution of the video data captured by each video camera etc., and the like.

Within the context of the present invention, contextual information (contextual or context data) should thus be construed as having its general meaning in the art. That is to say, to cover any relevant pieces of information that provide context to the second analytics model to allow it to better understand the question to be solved or issue at stake, and allow it to determine what to look for and where, and what to determine and/or give as a second analytics result (e.g. confirmation of the first analytics result and/or a refined first analytics result). As is apparent to the skilled person, the contextual information may come from a large variety of sources, such as the VMS. The contextual information may, regardless of its origin, be channelled to the second analytics model through the VMS.

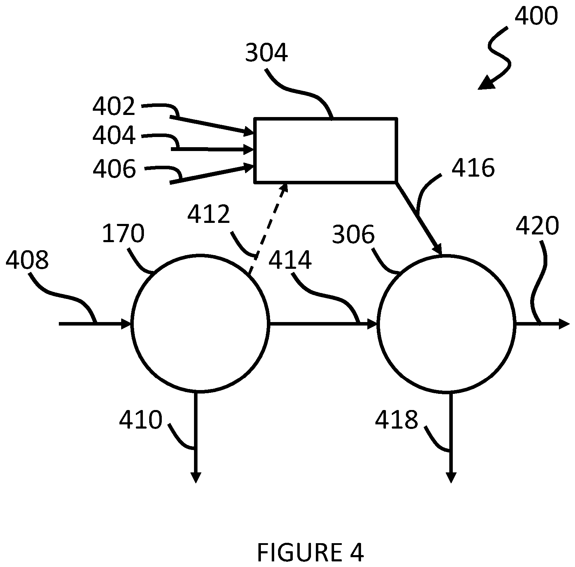

Figure 4 is a diagram and pipeline illustrating a portion 400 of the VMS 302 comprising the prompt engine 304, first analytics model (here, included in the analytics server 170) and second analytics model 306, and respective inputs and outputs thereof, as per the first embodiment of the invention.

In the present example, the analytics server 170 receives video data 408 from a video camera 110c. The analytics server 170 performs video analysis corresponding to that of a light classifier (e.g. for detecting objects such as cars or people). The analytics server 170 is configured to issue two types of results, that is, true negative results 410 (i.e. no cars or people detected) and results to be confirmed and/or refined, that is true positive and false positive results 414 (possible cars or people detected), as first analytics results. Each first analytics result 414 may be considered as an object and/or event of interest, whereas each true negative result 410 may be considered as objects and/or events which are not of interest. Alternatively, the first analytics model (here, the analytics server 170) may be configured such as to only issue first analytics results 414 and not issue anything when only true negative results are detected or determined. The first analytics result 414 output from the first analytics model 170 is then input into the second analytics model 306. The first analytics result 414 may include relevant frames (and/or video data) to be analysed by the second analytics model 306. However, such frames (and/or video data) may also be obtained by the second analytics model 306 from another source, such as the above-described recording server 150. The second analytics model 306 may search for and obtain data from different sources than the first analytics model, for instance from the recording server 150 and/or management server 130.

**In** the present example, the first analytics model (here, analytics server 170) is configured to inform the prompt engine 304 that a first analytics result 414 has been determined and issue an instruction 412 to the prompt engine 304 to issue a prompt 416 to the second analytics model 306. **In** other words, the first analytics model may trigger or initiate the prompt engine 304. The prompt engine 304 receives pieces of contextual information 402, 404, 406 from a variety of sources as described above, and at least from the VMS 302 (i.e. regardless of whether such pieces of information originate from the VMS 302). The prompt engine 304 may received pieces of contextual information 402, 404, 406 in a continuous or discontinuous manner, and only prompt the second analytics model upon receipt of an instruction 412 as described above. Alternatively, the prompt engine 304 may receive the contextual information 402, 404, 406 and instruction 412 altogether.

Typically, LVLMs are prompted by sentences such as 'Describe what do you see in this image?', 'Is there an anomaly in the scene?'. Then, one (either automatically or manually) needs to process the response and devise further prompts, referred to as prompt engineering, to conclude if there is a need for an action or not, iteratively. Prompt engineering might be very different from one setup to another. The present invention proposes to utilize contextual information, in particular that which is already existing in the VMS to devise a prompt engineering.

In above embodiments and examples, generating the prompt may be done by a rules-based model, in the VMS and/or in a dedicated prompt engine. For instance, the rules engine may comprise a rule such as 'send the first analytics result to the LVLM along with a list of active video cameras and scenes monitored by them'. The prompt engine may alternatively and/or additionally comprise a machine learning model, to learn from the video surveillance itself (e.g. from recordings of past video data and/or from the video surveillance set up and/or system) and/or the scenes which are monitored (i.e. the model would learn to generate different prompts based on the monitored environment, for example, different prompts based on whether the monitored environment is a hospital or shopping centre and the behaviour of people in such environments). For instance, such a machine learning model may learn that the video camera 110a is used for line crossing detection between points A and B, in either direction, and that an alarm is generally used to prompt a human to review the video data etc. Accordingly, such a machine learning model may be trained on training data or behavioural data from a prompting database, in order to be capable of devising prompts such as 'Was there an object passing the line drawn between points A and B monitored by video camera 110a?', 'Was there an object coming into/or getting out of the zone drawn between points C, D, E, and F monitored by video camera 110b?' or more advanced prompts such as 'Has the object which crossed the line A-B in the field of view of the video camera 110a, entered the perimeter C-D-E-F drawn in the field of view of the video camera 110b?'. The machine learning model may thus use, in operation, metadata or semantic segmentation previously recorded in the VMS (e.g. metadata generated from video analysis that was performed previously).

The prompt engine 304 may run as a dedicated computer program or virtual or physical server.

The prompt engine 304 may generate prompts based on at least one ontology-based knowledge graph representing events and/or objects detected in the video data and/or possible events and/or objects in the video data. For example, such a knowledge graph may be generated by the VMS (e.g. by performing video captioning with a machine learning model and generating a corresponding representation of subject-predicate-object triples) and subsequently used by the prompt engine to devise prompts. Alternatively, such a knowledge graph may be predetermined for one or more given scenes to be monitored.

**In** any cases, the method according to the invention may comprise displaying the prompt or a summary thereof to a user, while the prompt is being used and/or after it has been used. This allows a user of the VMS to check whether the video surveillance system is operating properly, and/or to understand (i.e. fact-check) how an analytics result was determined (e.g. by displaying the prompt along the second analytics result), and/or provide a chain of evidence that is particularly useful in the context of forensic analysis for which 'explainability' of outputs from analytics models is required. Indeed, since LVLM are known to hallucinate, i.e. to generate fictional content based on correct and/or incorrect facts, this may allow to reduce the risk of using erroneous prompts and results.

Alternatively, and/or additionally, the VMS may include an interface allowing a user to define which criteria should be used for devising the prompt, such as which cameras and/or which fields of view should be included in the prompt, in order to give more flexibility to human operators.

**In** the present example, the second analytics model 306 performs video analysis corresponding to that of a heavier classifier (i.e. a classifier that is more compute-intensive than the above first classifier), and is configured to issue two types of results, that is first analytics results confirmed as false positives 418 of the first analytics model, and confirmed and/or refined results 420 of the first analytics model, that is results related to objects and/or events of interest for the user.

Other configurations are of course possible. For instance, the first and second analytics models may perform video and/or object classification, but may alternatively not be classifiers, or only one or the other may be a classifier. The video analytics models may be configured to perform video analysis tasks which are common in the art such as those mentioned in the introduction of the present disclosure, but the skilled person understands that the benefit of the invention is achieved when the second analytics model is more compute-intensive than the first analytics model.

The analytics server 170 of figure 4 may of course correspond to an analytics model of a video camera as described above, i.e. when the video camera has built-in analytics capabilities, and/or as a combination of analytics in the video camera itself and in the analytics server 170.

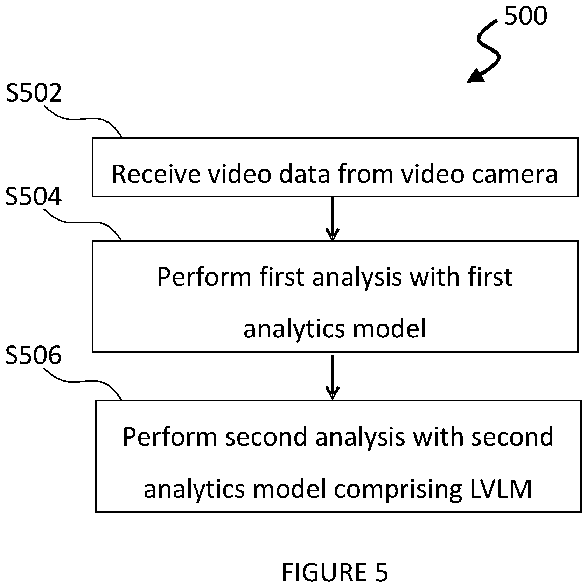

Figure 5 is a flowchart illustrating a method of video surveillance 500 according to the first embodiment of the invention.

In step S502, video data captured from a video camera 110a, 110b, 110c is received in the VMS 302.

In step S504, the first analysis is performed with a first analytics model, for detecting an event and/or object of interest in the video data as a first analytics result. In the present example, the first analytics model is part of the VMS, but the present embodiment is not limited to this. For instance, the first analytics model may be part of an analytics server 170 which may not be part of the VMS and operates alongside the VMS, based on instructions from the VMS.

In step S506, the second analysis is performed with a second analytics model comprising an LVLM, for confirming and/or refining the first analytics result as a second analytics result. According to the invention, performing the second analysis is more compute-intensive than performing the first analysis. That is, running the second analytics model is more compute-intensive than running the first analytics model. This will normally be the case if only the second analytics model comprises an LVLM and not the first analytics model (which could comprise a simpler model to perform basic analytics tasks). However, the present invention is not limited to this, and other configurations are possible providing that the above hierarchy of computational complexity is met (i.e. the second analytics model being more complex than the first when considering the resources required to run them).

In step S506, the LVLM will be prompted as previously described, i.e. based on a first analytics result received directly (as in Figure 4, for example) or indirectly from the first analytics model, and based on contextual information provided by at least the VMS (as in Figure 4 as well), as described above. The second analytics model may receive contextual information from additional sources, e.g. from physical sensors as described above. The LVLM may advantageously be prompted by a (dedicated) prompt engine, but the present invention is not limited to this, providing that the VMS is configured to issue a prompt to the LVLM.

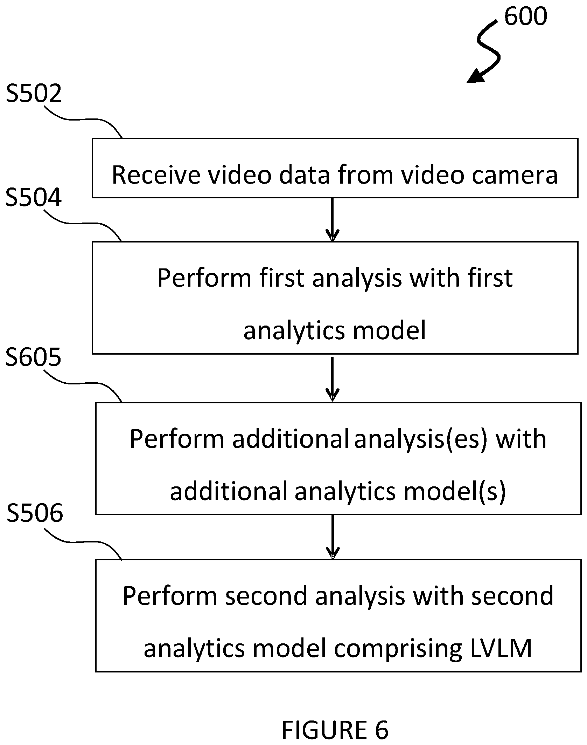

Figure 6 is a flowchart illustrating a method of video surveillance 600 according to a second embodiment of the invention. **In** the second embodiment, only differences and/or improvements from the method of video surveillance 500 of Figure 5 will be described.

The second embodiment differs from the first embodiment in that the method comprises one or more additional analytics models for performing further analysis between the above-described first and second analytics models, in a hierarchical chain of analytics models starting with the said first analytics model.

This corresponds to the additional step S605. Each additional analytics model confirms and/or refines the analytics result of a preceding model in the chain. The second analytics model will thus perform the said second analysis based on the first analytics result that has been confirmed and/or refined by any preceding models in the chain. **In** other words, a hierarchy of computational complexity of more than two levels (i.e. first and second analytics models) is possible, without departing from the scope of the present invention.

The present invention also provides, according to a second aspect, a computer program which, when run on a computer, causes the computer to carry out a method according to any one of the embodiments, alternatives, aspects and examples of the present disclosure, as shown for example in Figures 5 and 6. The invention also provides a computer-readable data carrier having stored thereon the said computer program.

The present invention also provides, according to a third aspect, a video surveillance system comprising at least one processor configured to:
- receive video data from at least one video surveillance camera in video management software - VMS;
- perform first analysis with a first analytics model, for detecting an event and/or object of interest in the video data as a first analytics result; and
- perform second analysis with a second analytics model comprising a Large Vision Language Model - LVLM, for confirming and/or refining the first analytics result as a second analytics result;
wherein performing the second analysis is more compute-intensive than performing the first analysis, and comprises prompting the LVLM using a prompt based on the first analytic result, and contextual information provided by at least the VMS.

That is, the present invention covers a video surveillance system comprising one or more processors configured to implement a method according to any one of the embodiments, alternatives, aspects and examples of the present disclosure, as in Figure 3 and corresponding steps of Figures 5 and 6.

While the present invention has been described with reference to embodiments, it is to be understood that the invention is not limited to the disclosed embodiments. The present invention can be implemented in various forms without departing from the principal features of the present invention as defined by the claims.

## Claims

1. A method of video surveillance comprising:
- receiving video data from at least one video surveillance camera in video management software - VMS;
- performing first analysis with a first analytics model, for detecting an event and/or object of interest in the video data as a first analytics result; and
- performing second analysis with a second analytics model comprising a Large Vision Language Model - LVLM, for confirming and/or refining the first analytics result as a second analytics result;
wherein performing the second analysis is more compute-intensive than performing the first analysis, and comprises prompting the LVLM using a prompt based on the first analytic result, and contextual information provided by at least the VMS.

2. The method according to claim 1, wherein the said at least one video surveillance camera performs the first analysis and wherein the VMS performs the second analysis for the video data from the said at least one video surveillance camera.

3. The method according to claim 1, wherein the VMS performs the first and second analyses for the video data from the said at least one video surveillance camera.

4. The method according to any one of the preceding claims, wherein the VMS receives video data from a plurality of video surveillance cameras, wherein the first analysis is performed for each video surveillance camera either in the VMS or in that video surveillance camera, and wherein the VMS respectively performs the second analysis for each video surveillance camera.

5. The method according to any one of the preceding claims, wherein the prompt is generated by a prompt engine in the VMS, wherein the prompt engine comprises at least one of a rule-based model or machine learning model.

6. The method according to any one of the preceding claims, wherein the LVLM is prompted upon obtaining the first analytics result.

7. The method according to any one of the preceding claims, wherein the first analytics result is obtained when at least one variable for detecting the event and/or object of interest in the video data meets or crosses a predetermined threshold.

8. The method according to any one of the preceding claims, wherein the prompt is displayed along the second analytics result.

9. The method according to any one of the preceding claims, wherein the analytics models are classifiers.

10. The method according to any one of the preceding claims, wherein at least the second analytics result triggers a notification and/or alarm in the VMS.

11. The method according to any one of the preceding claims, wherein the contextual information comprises one or more attributes of, and/or values provided by, at least one item chosen in the group comprising: the VMS, the at least one video surveillance camera, physical surveillance and/or security devices, a user of the VMS and/or their behaviour, a scene of the video surveillance, the video surveillance itself and/or one or more environmental conditions thereof.

12. The method according to any one of the preceding claims, the method further comprising using one or more additional analytics models to form a hierarchical chain of analytics models starting with the said first analytics model, wherein each additional analytics model confirms or refines the analytics result of a preceding model in the chain.

13. The method according to any one of the preceding claims, wherein at least one analytics model performs Video Anomaly Detection, VAD.

14. A computer program comprising instructions which, when executed by a computer, cause the computer to carry out a method according to any one of claims 1 to 13.

15. A video surveillance system comprising one or more processors configured to:
- receive video data from at least one video surveillance camera in video management software - VMS;
- perform first analysis with a first analytics model, for detecting an event and/or object of interest in the video data as a first analytics result; and
- perform second analysis with a second analytics model comprising a Large Vision Language Model - LVLM, for confirming and/or refining the first analytics result as a second analytics result;
wherein performing the second analysis is more compute-intensive than performing the first analysis, and comprises prompting the LVLM using a prompt based on the first analytic result, and contextual information provided by at least the VMS.
